# EUROPEAN PATENT APPLICATION

(11) **EP 0 621 455 A1**
(43) Date of publication of application: **26.10.1994**
(21) Application number: 94302869.6
(22) Date of filing: 22.04.1994
(51) Int. Cl.: F28F 9/02, B29C 33/48, B29L 31/18

(54) **Manufacture of a water box and expansion chamber assembly**

(30) Priority: 23.04.1993 GB 9308418
(71) Applicant: INTERNATIONAL RADIATOR SERVICES LIMITED, London SW1P 2PL (GB)
(72) Inventor: Sopwith, James Stephen, Evesham, Worcs WR11 5XD (GB)
(74) Representative: Treves, Barry William

(57) **Abstract**

Method of manufacturing a water box (52) and expansion chamber (51) assembly comprising moulding a housing (2) using a moulding tool (5 or 35) of at least two members (6 or 36, 8 or 38). A baflle (3) is subsequently fitted to the housing (2) to separate the water box (52) from the expansion chamber (51).

## Description

The present invention relates to the manufacture of a water box and expansion chamber assembly for a heat exchanger such as the radiator in the cooling circuit of a motor vehicle engine. The water box and expansion chamber are separated by a common wall within a housing. An orifice is provided in the wall and a siphon tube may be fitted so as to pass through the orifice to connect the water box to the expansion chamber.

US Patent No. 4592418 discloses such an assembly in which the water box and expansion chamber are disposed generally vertically with the upper part of the expansion chamber being provided with a liquid filler orifice suitable for receiving a cap that may include a pressure release valve.

In order to function correctly the volume of the expansion chamber has to be substantially greater, e g up to ten times greater, than the volume of the water box. Since the height of each must be the same i.e. approximately equal to the height of the radiator, and because of the closeness of the engine and other components in the engine compartment of the car, both the width and breadth of the expansion chamber are of necessity greater than the width and breadth respectively of the water box.

Several methods of manufacturing such an assembly by moulding have been devised but these usually entail forming the housing in more than one part which then have to be joined by welding and it has been found that the welded joints are often prone to leaks when the pressure and temperature of the coolant rises in use.

It is an object of the present invention to provide a method of manufacturing such an assembly using a moulding technique which substantially overcomes this disadvantage.

In accordance with the invention a method of manufacturing a water box and expansion chamber comprises moulding in a moulding press a housing using a moulding tool of at least two members, removing the moulded housing from the press and fitting a baffle to the housing to separate the water box from the expansion chamber.

In accordance with the invention also a method of manufacturing a water box and expansion chamber assembly is characterised in that a housing therefor is moulded in a moulding press, by assembling a moulding tool of a main member and at least one further member while the press is open, closing the press to cause the assembled moulding tool to be positioned within a mould, injecting moulding material into a moulding space between the moulding tool and the mould to form the housing, opening the press, moving the main member away from the moulded housing, the at least one further member becoming at least partially detached from the main member, removing the moulded housing from the press, and fitting a baffle to the housing to provide a common wall between the water box and the expansion chamber.

The said further member may be attached or attachable to the main member by means of complementary formations to form a slide e.g. of dovetail configuration, and/or a pivot whereby on movement on the main member out of the moulded housing the further member becomes at least partially detached by sliding and/or rotating.

The further member may become wholly detached from the main member on moving the main member away from the moulded housing and remain with the housing. The housing and further member are subsequently removed together from the press and then separated. Alternatively, the further member may move e.g. by sliding or rotating relative to the main member and remain attached thereto, on moving the main member away from the moulded housing and is thus separated from the housing with the main member.

The main member may itself comprise of plurality of components which move together, perhaps from different directions, on closing of the press.

Preferably the housing is moulded to have at least one internal housing formation and the baffle is sealingly fitted to said housing formation.

For example the formation may comprise a flange, a shoulder and/or a ledge and the baffle may be fitted using suitable attachment means.

Two embodiments of the invention will now be described by way of example only with reference to the accompanying drawings of which Figures 1-7d relate to the first embodiment and Figures 8-11 relate to the second embodiment. In particular:-
- Figure 1: shows a cross-section through the moulding tool;
- Figure 2: shows a partial side view, partial longitudinal cross-section of the final product i.e. the water box and expansion chamber assembly for a car radiator;
- Figure 3: shows a partial side view/partial longitudinal cross-sectional view through the housing of the assembly with the moulding tool therein;
- Figure 3a: shows a transverse cross-sectional view on line A-A of Figure 3;
- Figure 4: shows a partial side view/partial longitudinal cross-sectional view through the housing of the assembly with a further member of the moulding tool in position, the main member having been removed;
- Figure 4a: shows a cross-section on line B-B of Figure 4;
- Figures 5a, 5b and 5c: show a transverse cross- sectional view of the line B-B of Figure 4 and three stages of removal of the further member;
- Figure 6: shows a transverse cross-sectional view through a tank baffle;
- Figures 7a, 7b, 7c and 7d: show transverse cross- sectional views on line C-C of Figure 2 indicating the four stages of fitting the baffle to the housing before fitting the siphon tube;
- Figure 8: shows a partial side view/partial longitudinal cross-section through the housing of the assembly with the moulding tool therein;
- Figure 8a: shows a cross-section on line D-D of Figure 8;
- Figure 9: shows a partial side view/partial longitudinal cross-section through the housing of the assembly, the main member having been removed;
- Figure 9a: shows a cross-section on line E-E of Figure 9; and
- Figures 10 and 11: show cross-sections on line E-E of Figure 9 during further steps of removal of the further member.

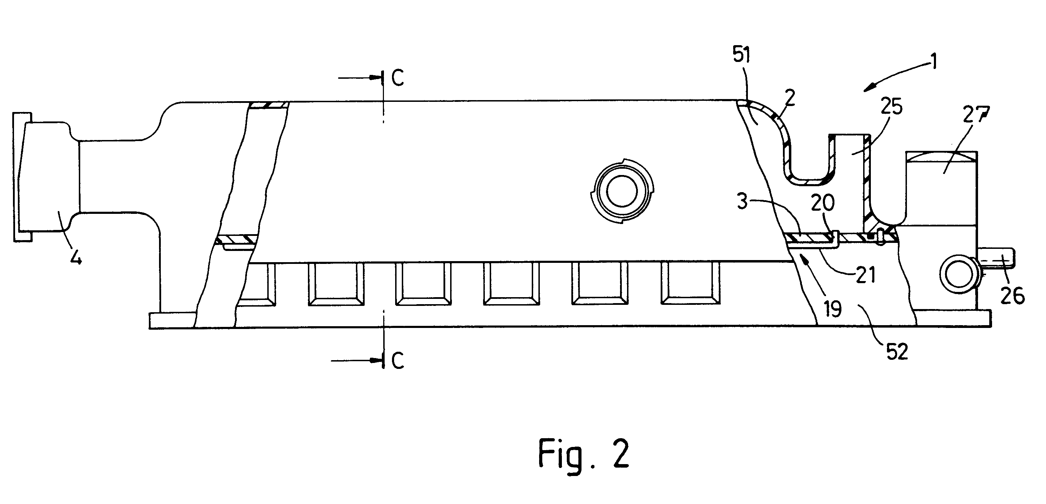

As shown particularly in Figure 2 a tank 1 for a cross flow radiator for a vehicle such as a car comprises a moulded outer housing 2 of elongated form, a baffle 3, also of elongated form dividing the interior of the housing 2 into two chambers, i.e. a water box (52) and an expansion chamber (51), and a siphon tube 19 which connects the two chambers. A radiator incorporating a similar tank is described in US patent No. 4592418.

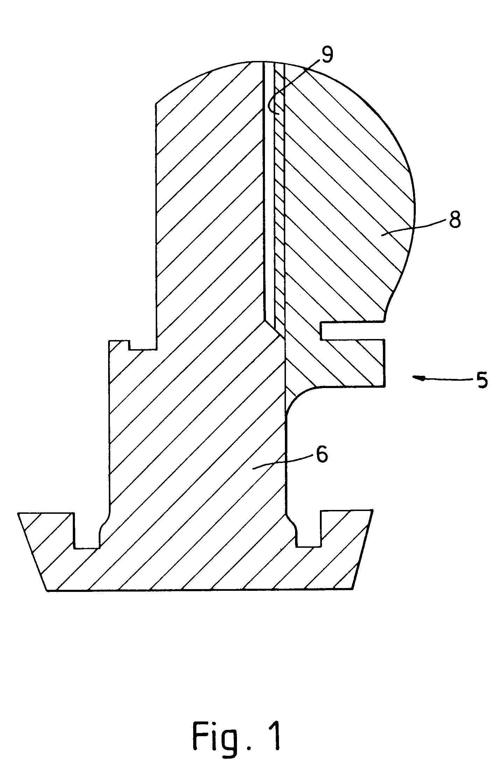

The moulding of the housing 2 is achieved by use of an internal moulding tool 5 (see Figure 1) which defines the interior shape of the housing and a mould (not shown) which defines the exterior shape, the mould and a main member 6 of the internal moulding tool 5 being fixed to a moulding press.

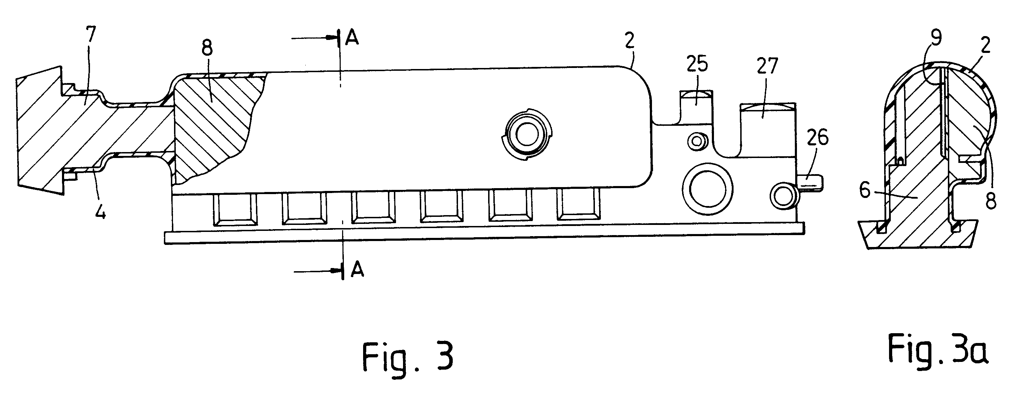

As shown particularly in Figures 1, 3 and 4 the internal moulding tool 5 comprises two main members 6, 7, the first member 6 being fixed directly to the lower platen of a moulding press and the second member 7 which is fixed via an intermediate device (not shown) to the lower platen, whereby on closing the press the second main member 7 is caused to move into position alongside the first member 6 as shown in Figure 3. The second member has an external shape such as to define the internal shape of the mouth 4 of a liquid coolant filler orifice. Third, fourth and subsequent analogous members (not shown) are provided to define the shapes of spigots 25, 26, 27 provided for the attachment of hoses to the housing. The internal moulding tool 5 also comprises a further member 8 which is attachable to the first main member 6 by means of a slide 9 e.g. of dovetail form, the complementary parts of which are provided by formations integrally formed with the first main member and the further member.

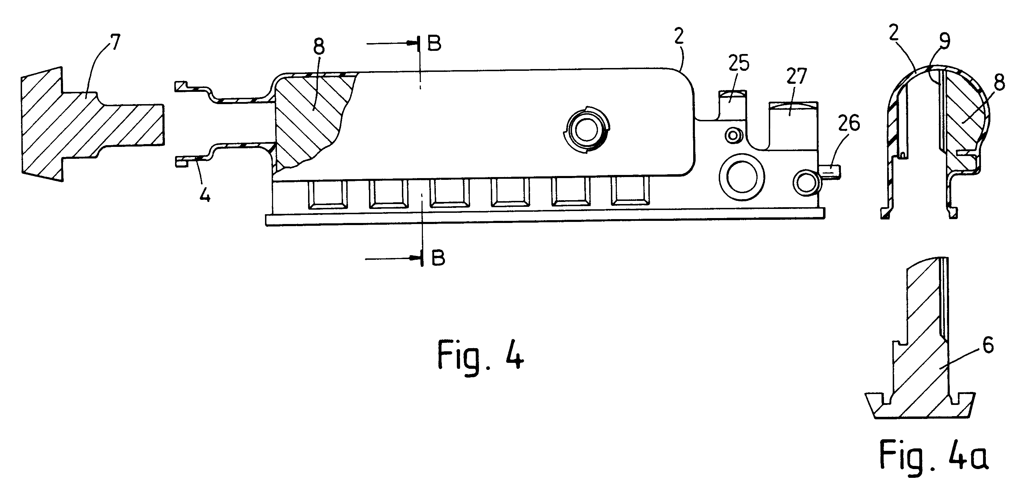

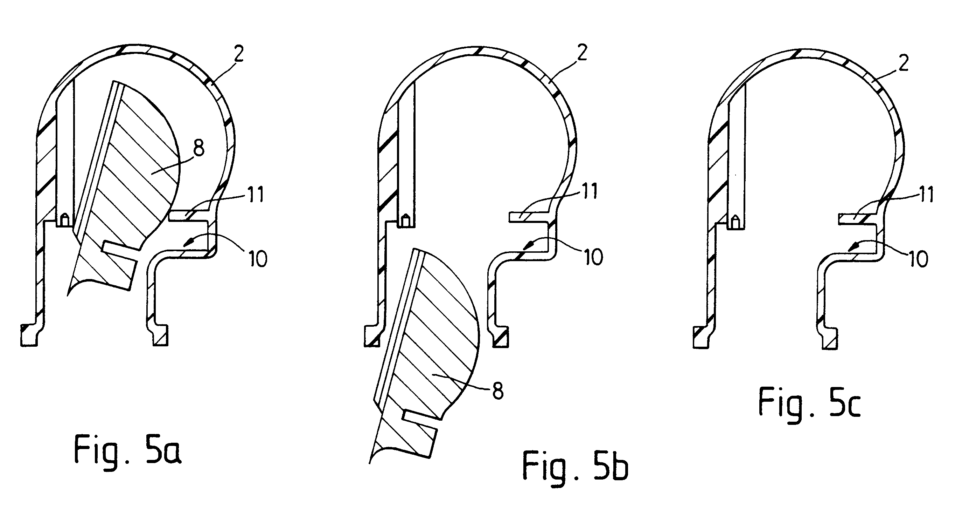

To mould the housing, the further member 8 is slid into attachment with the first main member 6 by hand or other means so as to take up the position shown in Figure 1 while the press is open. The press is then closed to bring upper and lower platens together so that the first and second parts of the internal moulding tool move together and take up a pre-determined position in the mould which is attached to the upper platen. Settable liquid moulding material e.g. a thermoplastic material, is then injected into the space between the mould and the internal moulding tool to form the housing 2. Once the material has set, the press is opened, and the first and second members of the moulding tool (and the third, fourth, fifth and subsequent members as provided) move away from the housing, the first member 6 sliding out of engagement from the further member 8 so as to leave it inside the shell 2. The moulded housing stays inside the mould (See Figures 4 and 4a). The housing is then removed from the mould either by mould ejectors, or by hand, and the further member 8 removed as shown in Figures 5a to 5c.

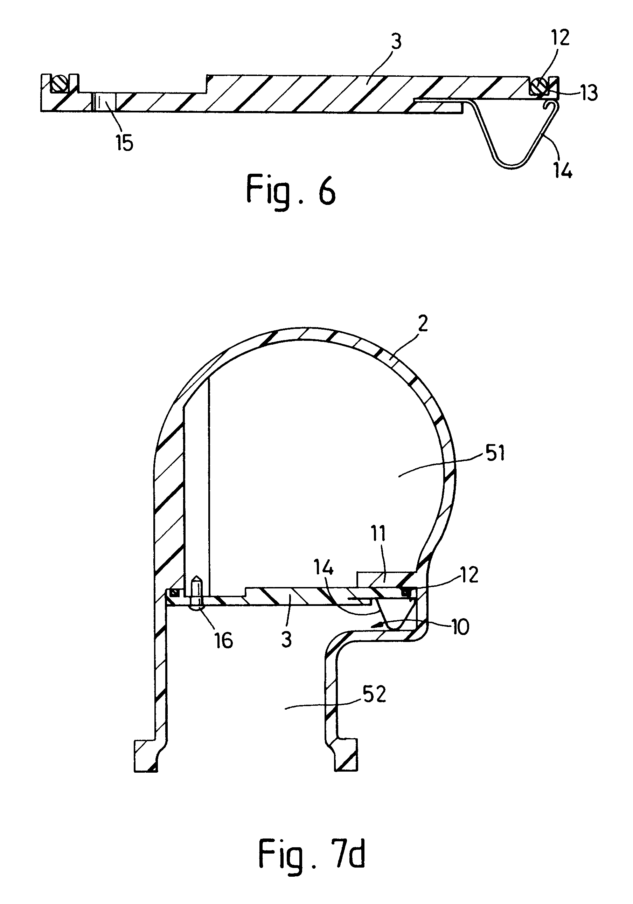

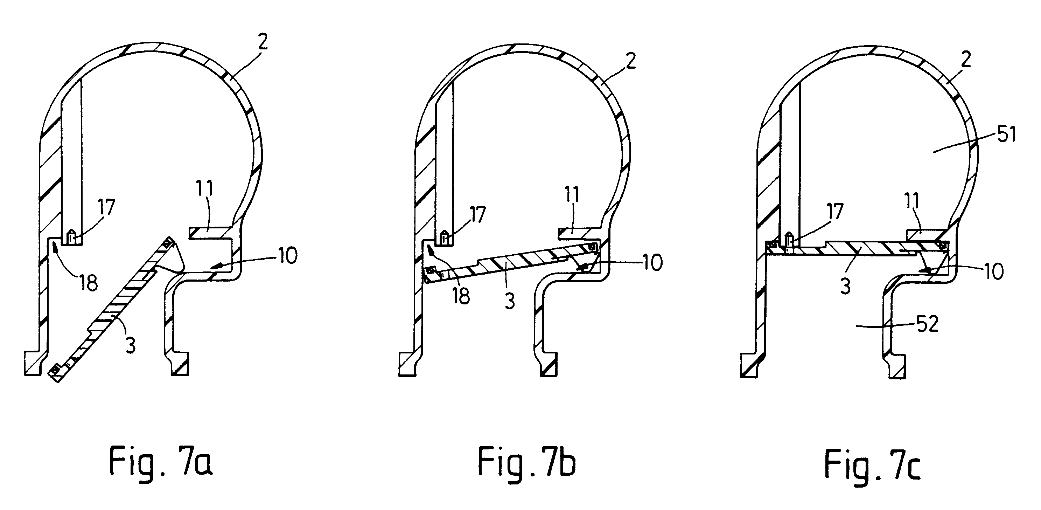

As can be seen particularly in 7a to 7d the housing 2 formed by the moulding process just described has a ledge 10 extending along most of its length and a flange 11 spaced apart from and parallel to the ledge. To complete the assembly of the tank a baffle 3 of generally rectangular form is moulded and fitted inside the shell. The baffle has a gasket or seal 12 which fits in a groove 13 extending around the periphery on one side thereof. A spring clip 14 or other suitable attachment or positioning means is provided on the other side adjacent one long edge and a plurality of fixing holes 15 are provided along the edge further from the edge where the spring is located. The baffle is inserted into the housing as shown in Figures 7a to 7d, the spring 14 engaging the ledge 10 and thus pressing the seal 12 on the other side of the baffle into sealing engagement with the flange 11. The baffle is then finally secured to the housing by inserting suitable attachment means e.g. screws, rivets or studs 16 through the baffle e.g. through moulded holes into corresponding holes 17 formed in the shell. The part of the seal adjacent the holes is pressed into sealing engagement with the shoulder 18 also formed on the housing.

Finally a siphon tube 19 (as shown in Figure 2) which has a short end portion 20 extending perpendicularly to the main length 21 thereof is placed in position and secured by means of a suitable adhesive or by clips integrally formed with or attached to the baffle, the short end portion extending through a hole provided in the baffle. Alternatively the siphon tube can be integral with the baffle e.g. being made by a suitable moulding process. The baffle thus provides a common wall which separates the water box from the expansion chamber.

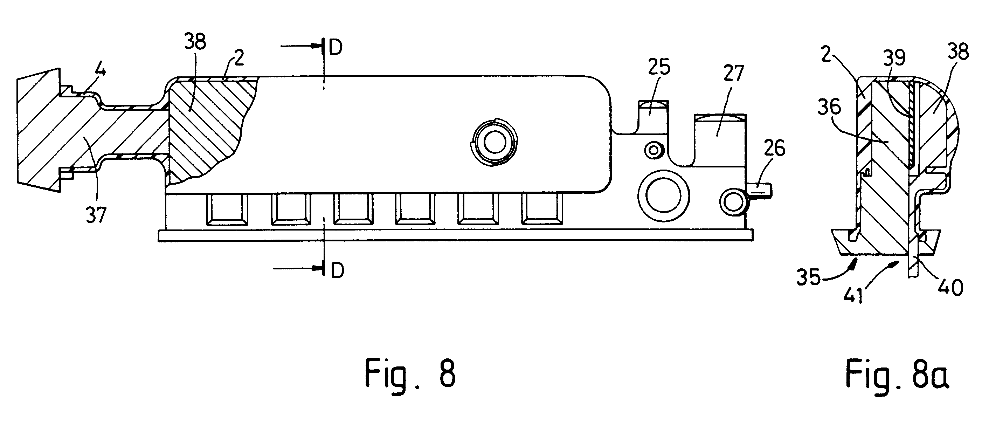

As shown in Figure 8 the tank 1 is the same as that shown in Figure 2 and the same reference numerals will be used for the same features.

The moulding of the housing 2 is achieved by use of an internal moulding tool 35 (see Figure 8a) which defines the interior shape of the housing and a mould (not shown) which defines the exterior shape, the mould and a main member 36 of the internal moulding tool 35 being fixed to upper and lower plates of a moulding press respectively.

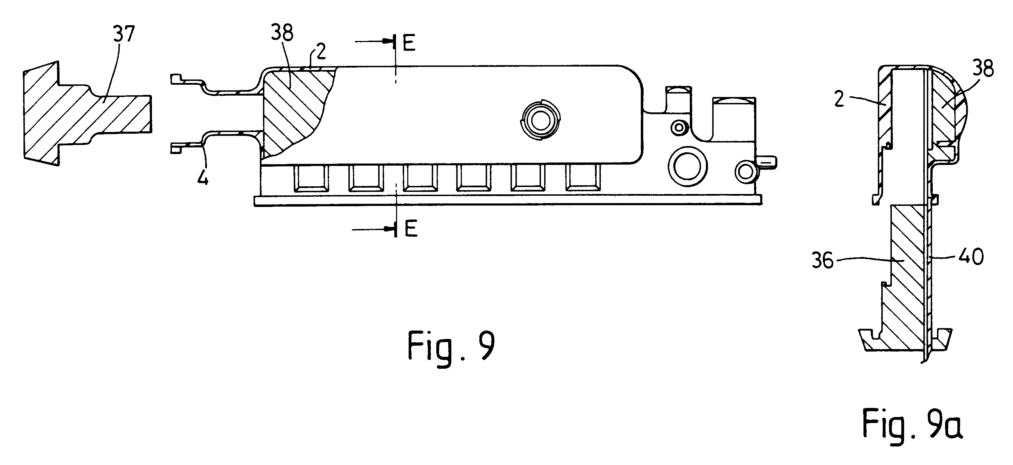

As shown particularly in Figures 8 and 8a the internal moulding tool 35 comprises two main members 36 and 37, the first member 36 being attached directly to the lower platen of the moulding press and the second main member 37 via an intermediate device (not shown) to the lower platen, whereby on closing the press the second main member 37 is caused to move to the position alongside the first main member 36 as shown in Figure 8. The second main member 37 has an external shape such as to define the mouth 4 of a liquid coolant filler orifice for the tank 1. Third, fourth and subsequent analogous members (not shown) are provided to define the shapes of spigots 25, 26, 27 provided for the attachment of hoses to the housing. The internal moulding tool 35 also comprises a further member 38 which is attached to the first main member 36 by means of an elongated slide 39 e.g. of dovetail form, the complementary parts of which are provided by formations integrally formed with the first main member 36 and the further member 38. As can be seen particularly in Figures 8a and 9a, the elongated slide is formed as a tongue 40 which extends through an aperture 41 in the main member 36.

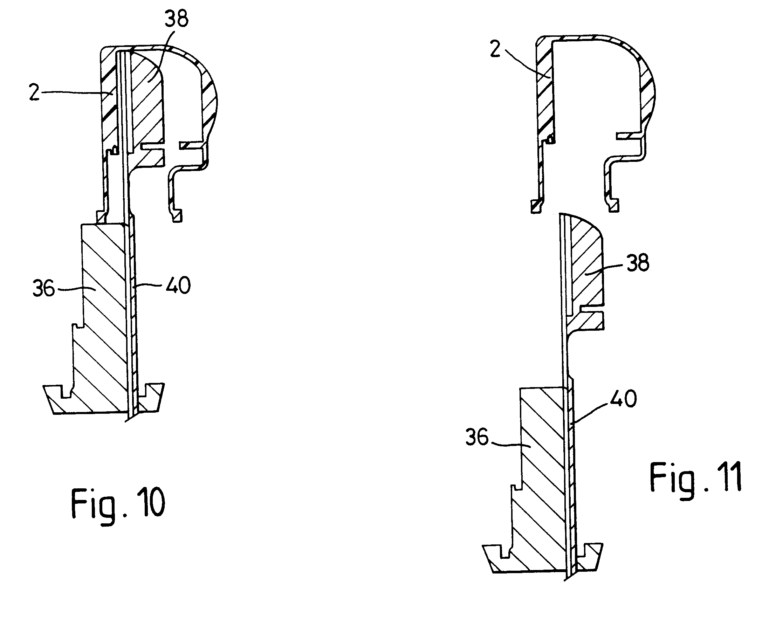

To mould the housing 2, the further member 38 is slid into the position shown particularly in Figure 8a by hand or other means while the press is open. The press is then closed to bring upper and lower platens together so that the first, second third, fourth (and any subsequent members) of the internal moulding tool move together and take up a predetermined position in the mould which is attached to the upper platen of the press. Settable liquid moulding material e.g. a thermosetting plastic material, is then injected into the space between the internal moulding tool and the mould to form the housing 2. Once the material has set, the press is opened, and the first, second, third, fourth (and subsequent) members of the moulding tool move away from the housing, the first member 36 and the member 37 sliding out of the housing as shown in Figure 9a. The further member 38, still attached to the first member 36 by means of the slide, remains in the position shown in Figure 9a. The moulded housing 2 is then moved sideways relative to the further member 38 to the position shown in Figure 10 so that the housing can then be removed from the press as shown in Figure 11.

The subsequent stages of assembly of the water box and expansion chamber assembly are the same as in the first embodiment.

As a modification to the second embodiment the further member 38 may be attached to the first main member 36 by a slide and pivot, such that when the press is opened and the removal sequence is at the stage shown in Figure 9a, the further member may be rotated in an anti-clockwise direction and then the moulded housing may be moved clear.

Compared with previously used methods of manufacturing such an assembly the method of the present invention provides an assembly having no external joints thus inherently avoiding leaks, and a reduced number of component parts which are readily assembled. The moulding tools are cost effective and the final product has increased strength and durability.

## Claims

1. A method of manufacturing a water box (52) and expansion chamber (51) assembly characterised by comprising moulding in a moulding press a housing (2) using a moulding tool (5 or 35) of at least two members (6,8 or 36,38), removing the moulded housing (2) from the press and fitting a baffle (3) to the housing to separate the water box (52) from the expansion chamber (51).

2. A method of manufacturing a water box (52) and expansion chamber (51) assembly characterised in that a housing (2) therefor is moulded in a moulding press, by assembling a moulding tool (5 or 35) of a main member (6 or 36) and at least one further member (8 or 38) while the press is open, closing the press to cause the assembled moulding tool (5 or 35) to be positioned within a mould, injecting moulding material into a moulding space between the moulding tool and the mould to form the housing (2), opening the press, moving the main member (6 or 36) away from the moulded housing (2), the at least one further member (8 or 38), becoming at least partially detached from the main member (6), removing the moulded housing (2) from the press, and fitting a baffle (3) to the housing to provide a common wall between the water box (52) and the expansion chamber (51).

3. A method according to Claim 2 characterised in that said further member (8 or 38) is attached to the main member (6 or 36).

4. A method according to Claim 2 characterised in that the further member (8 or 38) is attachable to the main member (6 or 36).

5. A method according to Claim 3 or Claim 4 characterised in that said further member (8 or 38) is attached or attachable to the main member (6 or 36) by means of complementary formations to form a slide (9 or 39).

6. A method according to Claim 5 characterised in that the complementary formations forming the slide (9 or 39) are of dovetail configuration.

7. A method according to Claim 3 or Claim 4 characterised in that said further member (8 or 38) is attached or attachable to the main member (6 or 36) by means of complementary formations to form a pivot.

8. A method according to any one of Claims 2-7 characterised in that the further member (8 or 38) becomes wholly detached from the main member (6 or 36) on moving the main member (6 or 36) away from the moulded housing (2) and remains with the housing (2).

9. A method according to Claim 8 characterised in that the housing and further member (8 or 38) are subsequently removed together from the press and then separated.

10. A method according to Claim 8 characterised in that the further member (8 or 38) is moved on moving the main member (6 or 36) away from the moulded housing (2) and is thus separated from the housing (2) with the main member (6 or 36).

11. A method according to any one of Claims 2-10 characterised in that the main member (6 or 36) comprises a plurality of components which move together on closing of the press.

12. A method according to any one of the preceding claims characterised in that the housing (2) is moulded to have at least one internal housing formation (10,11,18) and the baffle (3) is sealingly fitted to said housing formation.

13. A method according to Claim 12 characterised in that the housing formation comprises a flange (10), a ledge (11) or a shoulder (18) and the baffle (3) is fitted by suitable attachment means (16).

14. A water box and expansion chamber assembly manufactured by a method according to any one of the preceding claims.
